# EUROPÄISCHE PATENTSCHRIFT

(11) **EP 0 532 950 B1**
(45) Veröffentlichungstag und Bekanntmachung des Hinweises auf die Patenterteilung: **10.05.1995**
(21) Anmeldenummer: 92114589.2
(22) Anmeldetag: 27.08.1992
(51) Int. Cl.: B65H 3/32, B65G 59/02, B65G 61/00

(54) **Vorrichtung zum Entstapeln von blockweise auf Paletten gestapelten Zuschnitten**
Device for unpiling sheets piled in block-form on pallets
Dispositif pour le désempilage de feuilles empilées en blocs sur des palettes

(30) Priorität: 20.09.1991 DE 9111788 U
(43) Veröffentlichungstag der Anmeldung: 24.03.1993
(73) Patentinhaber: Niepmann Traylift Transportsysteme GmbH & Co. KG, D-58285 Gevelsberg (DE)
(72) Erfinder: Brinker, Alfred, Dr., W-5820 Gevelsberg (DE)

(56) Entgegenhaltungen:
- EP-A- 0 363 722

## Beschreibung

Die Erfindung betrifft eine Vorrichtung zum Entstapeln von blockweise unter Einfügen von Zwischenlagen auf Paletten gestapelten Zuschnitten aus Papier, Pappe, Karton, Kunststoff oder dergleichen durch einen räumlich gesteuert verfahrbaren Greifkopf, an dem ein etwa waagerecht ausgerichtetes Einstechwerkzeug angeordnet ist, das durch eine waagerechte Bewegung den jeweils zu entnehmenden Zuschnittblock untergreift, durch eine anschließende Bewegung des Greifkopfes in senkrechter und/oder waagerechter Richtung von der jeweiligen, die gesamte Fläche der Palette überdeckenden Zwischenlage entfernt und einer Weiterverarbeitung zuführt.

Derartige Vorrichtungen zum Entstapeln von blockweise auf Paletten gestapelten Zuschnitten sind aus der EP-A-0 363 722 bekannt. Bei diesen Vorrichtungen ist das Einstechwerkzeug um eine waagerechte Achse geringfügig verschwenkbar am Greifkopf gelagert. Die Verschwenkbewegung des Einstechwerkzeuges wird durch einen Schalthebel überwacht, der mittels eines Schalters die Absenkbewegung des Greifkopfes unterbricht, sobald das Einstechwerkzeug entgegen einer einstellbaren Federkraft um einen vorgebbaren Winkel verschwenkt worden ist.

Diese bekannten Vorrichtungen arbeiten in der Praxis solange zufriedenstellend, wie die Zwischenlagen über die gesamte Fläche der Palette gesehen für sämtliche Zuschnittblöcke eine Ebene bilden. Sofern eine Zwischenlage größere Höhenunterschiede bzw. Schrägstellungen der Auflageflächen für die einzelnen Zuschnittblöcke aufweist, entsteht bei der bekannten Vorrichtung zum einen die Gefahr, daß die Vorderkante des Einstechwerkzeuges in die Zwischenlage einsticht. Hierdurch wird die Zwischenlage beschädigt, und es besteht die Möglichkeit, daß der eigentliche Greifer anstelle des Zuschnittblockes die Zwischenlage ergreift und mit dieser die gesamte Lage an Zuschnittblöcken in Unordnung bringt, die nur durch einen manuellen Eingriff beseitigt werden kann. Zum anderen besteht die Gefahr, daß die untersten Zuschnitte des jeweils zu entfernenden Zuschnittblockes nicht erfaßt werden und auf der Zwischenlage verbleiben. Da nach dem Entfernen sämtlicher Zuschnittblöcke von einer Zwischenlage auch diese Zwischenlage für das weitere Entstapeln der Palette entfernt werden muß, können durch die liegengebliebenen Zuschnitte Funktionsstörungen beim Entfernen der Zwischenlage auftreten. Schließlich ist es möglich, daß ein Zuschnitt durch ein fehlerhaftes Ansetzen des Einstechwerkzeuges zerknittert, aufgespalten oder an einer an der fertigen Packung sichtbaren Stelle beschädigt wird.

Die voranstehend erwähnten Abweichungen einer Zwischenlage von einer Ebene können durch mehrere Gegebenheiten verursacht werden. So werden beispielsweise die Zuschnittblöcke beim Stanzen in den Druckereien auf hauseigenen Paletten abgelegt, wobei sich die Anordnung auf diesen hauseigenen Paletten aus der Bogengröße und dem optimalen Zuschnitt-Nutzen ergibt, der mit minimalem Papierabfall von einer gegebenen Bogengröße erfolgt. Nach dem Stanzen werden die Zuschnittblöcke dann auf Euro- oder Industrie-Paletten mit Zwischenlagen umgeschichtet, wobei die Zwischenlagen dazu dienen, die Zuschnittblöcke beim Transport zu stabilisieren. Sowohl bei dieser Umschichtung als auch bei der Entnahme von Stichproben, beim Transport und im Lager kann es passieren, daß die Stapel ihre gerade Ausrichtung verlieren. Hinzu kommt, daß die Zuschnitte durch einseitige Lackierung oder Feuchtigkeitsaufnahme nicht immer flachliegen, sondern sich wölben.

Insgesamt führt dies dazu, daß die einzelnen Zwischenlagen in Wellen oder Stufen verformt sind. Hierbei kann es durch Ungenauigkeiten oder Beschädigungen der Paletten auch passieren, daß eine Ecke oder Kante einer Zwischenlage höherliegt als die gegenüberliegende Ecke oder Kante.

Wenn Paletten mit derart verformten Zwischenlagen mit den bekannten Vorrichtungen entstapelt werden sollen, verursachen diese Ungenauigkeiten die eingangs erwähnten Störungen. Um dieses Problem zu lösen, sind zwar bereits Systeme mit Sonderpaletten und Zwischenlagen vorgeschlagen worden, in welchen die Zuschnittblöcke auf mechanische Weise in präzisem Verhältnis zueinander gehalten werden. Außerdem ist es möglich, die Zuschnittblöcke mit Banderolen zu versehen, um deren Entstapeln auch bei den voranstehend beschriebenen Ungenauigkeiten zu ermöglichen. Diese Systeme sind jedoch kompliziert und kostenaufwendig.

Der Erfindung liegt die **Aufgabe** zugrunde, eine Vorrichtung der eingangs beschriebenen Art zum Entstapeln von blockweise auf Paletten gestapelten Zuschnitten derart weiterzubilden, daß sie auch bei Paletten eingesetzt werden kann, deren als Auflagefläche für die einzelnen Zuschnittblöcke dienende Zwischenlagen in erheblichem Maße von einer Ebene abweichen.

Die **Lösung** dieser Aufgabenstellung durch die Erfindung ist dadurch gekennzeichnet, daß am Greifkopf zwei auf die Zwischenlage absenkbare und in der abgesenkten Stellung gegenläufig zueinander bewegbare und damit den zu entnehmenden Zuschnittblock untergreifende Einstechwerkzeuge angeordnet sind.

Durch diese erfindungsgemäße Weiterbildung der bekannten Vorrichtung zum Entstapeln von blockweise auf Paletten gestapelten Zuschnitten ergibt sich der Vorteil, daß der zu entfernende Zuschnitt zuerst von der Seite her erfaßt und untergriffen wird, so daß ggf. auftretende Beschädigungen unkritisch sind, da die beschädigte Stelle im Inneren der aus dem Zuschnitt entstehenden Verpackung liegt.

Gemäß einem weiteren Merkmal der Erfindung können die beiden Einstechwerkzeuge zugleich als Tragwerkzeuge für das Abheben und den Abtransport des jeweiligen Zuschnittblockes ausgebildet sein. Sie werden in diesem Fall nach dem seitlichen Einstechen in axialer Richtung unter den jeweiligen Zuschnittblock geschoben, so daß dieser auf den Einstechwerkzeugen zu liegen kommt und durch eine Bewegung des Greifkopfes in senkrechter und/oder waagerechter Richtung von der jeweiligen Zwischenlage entfernt und einer Weiterverarbeitung zugeführt werden kann.

Bei einer alternativen Ausbildung der erfindungsgemäßen Vorrichtung ist zusätzlich zu den beiden Einstechwerkzeugen ein Abhebe- und Transportwerkzeug am Greifkopf angeordnet, das zwischen den beiden Einstechwerkzeugen angeordnet ist und relativ zu diesen Einstechwerkzeugen in axialer Richtung bewegbar ist. Bei dieser erfindungsgemäßen Ausgestaltung wird der jeweils zu entfernende Zuschnittblock von den gegenläufig zueinander bewegbaren Tragwerkzeugen lediglich angehoben, so daß das zusätzliche Abhebe- und Transportwerkzeug sicher in den Spalt zwischen der Zwischenlage und dem untersten Zuschnitt des jeweiligen Zuschnittblockes eingefahren werden kann, damit die anschließende Bewegung des Greifkopfes in senkrechter und/oder waagerechter Richtung den Zuschnittblock von der Zwischenlage abhebt und einer Weiterverarbeitung zuführt.

Auf der Zeichnung sind ein Ausführungsbeispiel der erfindungsgemäßen Vorrichtung und eine mit dieser Vorrichtung zu entstapelnde Palette dargestellt, und zwar zeigen:
- Fig. 1: eine perspektivische Darstellung einer üblichen, mit Zuschnittblöcken beladenen Palette,
- Fig. 2: eine ebenfalls perspektivische Darstellung einer Vorrichtung zum Entstapeln der blockweise und jeweils auf einer Zwischenlage gestapelten Zuschnitte und
- Fig. 3: eine Draufsicht auf mehrere Zuschnittblöcke beim Ansetzen der Einstechwerkzeuge und eines Abhebe- und Transportwerkzeuges.

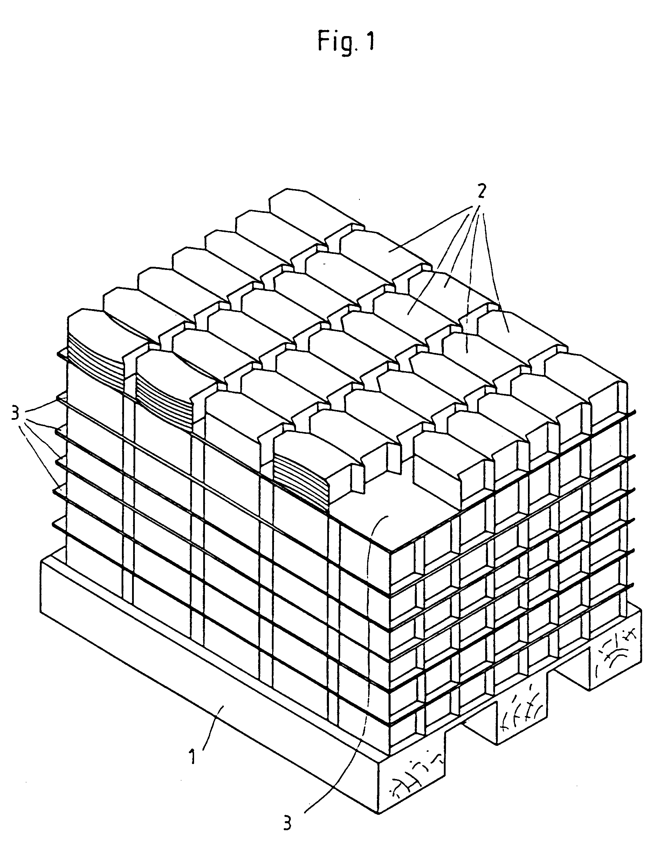

In Fig. 1 ist eine Palette 1 zu erkennen, auf der eine Mehrzahl von Zuschnittblöcken 2 gestapelt ist, wobei die übereinanderliegenden Zuschnittblöcke 2 jeweils durch eine Zwischenlage 3 getrennt sind, welche die gesamte Fläche der Palette 1 überdeckt.

Durch einseitige Lackierung, unterschiedliche Feuchtigkeitsaufnahme und ähnliche Einflüsse kann es dazu kommen, daß die durch einzelne Zuschnitte gebildeten Zuschnittblöcke 2 nicht flach, sondern entweder nach unten oder oben gewölbt auf den Zwischenlagen 3 liegen. In Fig. 1 sind derartige konkave bzw. konvexe Wölbungen einiger Zuschnittblöcke 2 angedeutet, wobei im Normalfall bei einer Palette nicht gleichzeitig konkave und konvexe Wölbungen auftreten. Auch durch andere Einflüsse, beispielsweise Entnahme einzelner Zuschnitte, Prägungen in den Zuschnitten oder schräge Ausrichtung einzelner Zuschnittblöcke 2 treten Höhendifferenzen zwischen benachbarten Zuschnittblöcken 2 auf, die insgesamt dazu führen, daß die einzelnen Zwischenlagen 3 sich nicht in einer Ebene befinden. Die als Auflagefläche für eine Mehrzahl von Zuschnittblöcken 2 dienenden Zwischenlagen 3 sind statt dessen in Wellen oder Stufen verformt, wobei es zusätzlich vorkommen kann, daß eine Ecke oder Kante einer Zwischenlage 3 höherliegt als die gegenüberliegende Ecke oder Kante. Dies kann auch durch Ungenauigkeiten oder Beschädigungen an den Paletten 1 verursacht sein.

Diese Höhenunterschiede im Bereich der Fläche einer einzigen Zwischenlage 3 und damit hinsichtlich des jeweils untersten Zuschnittes benachbarter Zuschnittblöcke 2 verursachen die Gefahr, daß das Einstechwerkzeug einer Vorrichtung zum Entstapeln der Palette 1 entweder in das Material der Zwischenlage 3 einsticht oder die jeweils untersten Zuschnitte eines Zuschnittblockes 2 durch zu hohes Einstechen des Einstechwerkzeuges in den Zuschnittblock 2 nicht erfaßt und damit auf der Zwischenlage 3 liegenläßt. Diese liegengebliebenen Zuschnitte können zu einer Störung des weiteren Entstapelvorganges führen, beispielsweise dadurch, daß die Zuschnitte anstelle der Zwischenlage 3 durch einen Sauggreifer erfaßt werden, der an sich zur Abnahme der von Zuschnittblöcken 2 befreiten Zwischenlage 3 dient.

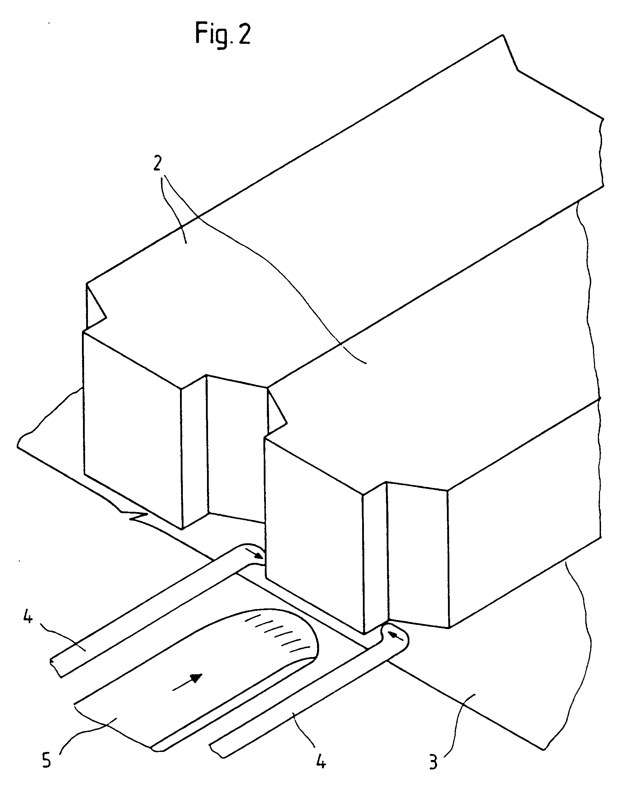

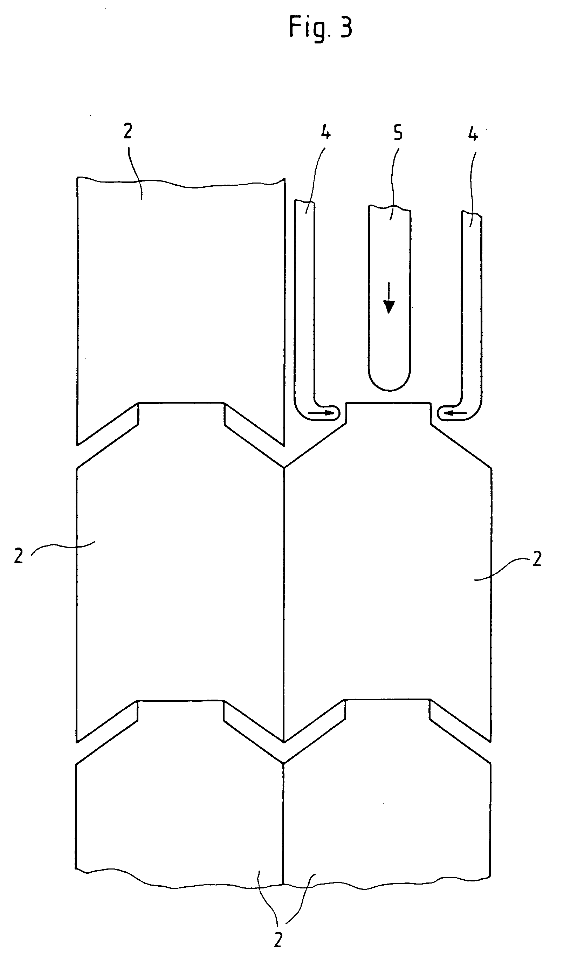

Um diese Komplikationen und ggf. auch Beschädigungen an den Zuschnitten zu vermeiden, sind an dem auf der Zeichnung nicht dargestellten Greifkopf zwei durch die Absenkbewegung des Greifkopfes auf die Zwischenlage 3 absenkbare Einstechwerkzeuge 4 angeordnet, die in der abgesenkten Stellung gegenläufig zueinander bewegbar sind, wie die Pfeile in den Fig. 2 und 3 andeuten. Nach dem seitlichen Ansetzen der Einstechkanten dieser Einstechwerkzeuge 4 beispielsweise an die vorstehende Lasche der zu Zuschnittblöcken 2 gestapelten Zuschnitte gemäß den Fig. 2 und 3 werden die Einstechwerkzeuge 4 gegenläufig zueinander und aufeinander zu bewegt, so daß sie den jeweils untersten Zuschnitt des auf der Zwischenlage 3 aufstehenden Zuschnittblockes 2 untergreifen. Da es sich bei der auf der Zeichnung dargestellten Lasche um die Verstärkungslasche einer späteren Zigarettenverpackung handelt, die in der fertigen Packung nach innen geklappt unsichtbar im Inneren der Packung liegt, sind selbst auftretende leichte Beschädigungen unkritisch.

Durch ein leichtes Anheben oder durch die Keilform der Einstechwerkzeuge 4 wird anschließend bei dem auf den Fig. 2 und 3 dargestellten Ausführungsbeispiel ein Spalt zwischen der Zwischenlage 3 und dem untersten Zuschnitt des jeweiligen Zuschnittblockes 2 geschaffen; in diesen Spalt kann nunmehr durch axiale Bewegung ein Abhebe- und Transportwerkzeug 5 eingeführt werden, das zwischen den beiden Einstechwerkzeugen 4 angeordnet ist und relativ zu diesen Einstechwerkzeugen 4 in axialer Richtung bewegt wird. Mit Hilfe dieses Abhebe- und Transportwerkzeuges 5 kann anschließend der untergriffene Zuschnittblock 2 durch eine Bewegung des Greifkopfes in senkrechter und/oder waagerechter Richtung von der Zwischenlage 3 entfernt und einer Weiterverarbeitung zugeführt werden. Beim dargestellten Ausführungsbeispiel ist das Abhebe- und Transportwerkzeug 5 zungenartig ausgebildet.

Bei einer alternativen, auf der Zeichnung nicht dargestellten Ausführungsform ist es möglich, auf das Abhebe- und Transportwerkzeug 5 zu verzichten und statt dessen die beiden Einstechwerkzeuge 4 zugleich als Tragwerkzeuge für das Abheben und den Abtransport des jeweiligen Zuschnittblockes 2 auszubilden. In diesem Fall werden die aufeinander zu bewegten, unter dem vorderen Ende des untersten Zuschnittes liegenden Einstechwerkzeuge 4 durch eine zusätzliche axiale Bewegung derart unter den Zuschnittblock 2 bewegt, daß dieser auf den Einstechwerkzeugen 4 aufliegt, so daß auch in diesem Fall durch eine anschließende Bewegung des Greifkopfes in senkrechter und/oder waagerechter Richtung der jeweilige Zuschnittblock 2 von der Zwischenlage 3 abgehoben und einer Weiterverarbeitung zugeführt werden kann.

### Bezugszeichenliste:

- 1: Palette
- 2: Zuschnittblock
- 3: Zwischenlage
- 4: Einstechwerkzeug
- 5: Abhebe- und Transportwerkzeug

## Patentansprüche

1. Vorrichtung zum Entstapeln von blockweise unter Einfügen von Zwischenlagen auf Paletten gestapelten Zuschnitten aus Papier, Pappe, Karton, Kunststoff oder dergleichen durch einen räumlich gesteuert verfahrbaren Greifkopf, an dem ein etwa waagerecht ausgerichtetes Einstechwerkzeug (5) angeordnet ist, das durch eine waagerechte Bewegung den jeweils zu entnehmenden Zuschnittblock (2) untergreift, durch eine anschließende Bewegung des Greifkopfes in senkrechter und/oder waagerechter Richtung von der jeweiligen, die gesamte Fläche der Palette (1) überdeckenden Zwischenlage (3) entfernt und einer Weiterverarbeitung zuführt,
**dadurch gekennzeichnet,**
daß zusätzlich zu dem Einstechwerkzeug (5) ein zweites an dem Greifkopf angeordnetes Einstechwerkzeug vorgesehen wird, und beide Einstechwerkzeuge auf die Zwischenlage (3) absenkbar und in der abgesenkten Stellung gegenläufig zueinander bewegbar sind und dabei den zu entnehmenden Zuschnittsblock (2) untergreifen.

2. Vorrichtung nach Anspruch 1, dadurch gekennzeichnet, daß zusätzlich zu den beiden Einstechwerkzeugen (4) ein Abhebe- und Transportwerkzeug (5) am Greifkopf angeordnet ist, das zwischen den beiden Einstechwerkzeugen (4) angeordnet ist und relativ zu diesen Einstechtwerkzeugen (4) in axialer Richtung bewegbar ist.

## Claims

1. Apparatus for destacking blanks, which are stacked in a blockwise manner on pallets, with the interposition of intermediate layers, and consist of paper, paperboard, cardboard, plastic or the like, by means of a gripping head which can be displaced in a three-dimensionally controlled manner and on which there is arranged an approximately horizontally aligned insertion tool (4) which, by virtue of a horizontal movement, engages beneath the block of blanks (2) which is to be removed in each case, by virtue of a subsequent movement of the gripping head in the vertical and/or horizontal direction, removes said block of blanks from the respective intermediate layer (3), covering over the entire surface of the pallet (1), and feeds it on for further processing, characterized in that, in addition to the insertion tool (4), there is provided a second insertion tool, arranged on the gripping head, and the two insertion tools can be lowered to the intermediate layer (3) and can be moved in opposite directions with respect to one another in the lowered position and thereby engage beneath the block of blanks (2) which is to be removed.

2. Apparatus according to Claim 1, characterized in that, in addition to the two insertion tools (4), a lifting and transporting tool (5) is arranged on the gripping head, which tool (5) is arranged between the two insertion tools (4) and can be moved in the axial direction relative to said insertion tools (4).

## Revendications

1. Dispositif pour le désempilage de feuilles en papier, carton, matière plastique ou analogues, empilées en blocs sur des palettes avec des couches intermédiaires intercalées, au moyen d'une tête preneuse à déplacement commandé dans l'espace, sur laquelle est monté un outil plongeur (5) qui est orienté sensiblement horizontalement, qui, par un déplacement horizontal, s'engage sous le bloc de feuilles correspondant (2) à prélever et qui, par un déplacement ultérieur de la tête preneuse dans le sens vertical et/ou horizontal, éloigne ledit bloc de feuilles de la couche intermédiaire correspondante (3) recouvrant toute la surface de la palette (1) et le dirige vers un poste de traitement ultérieur, caractérisé en ce qu'en plus de l'outil plongeur (5), il est prévu un second outil plongeur disposé sur la tête preneuse, et les deux outils plongeurs peuvent être descendus sur la couche intermédiaire (3) et, en position descendue, être déplacés dans des directions opposées l'une à l'autre et s'engagent ainsi sous le bloc de feuilles (2) que l'on veut prélever.

2. Dispositif selon la revendication 1, caractérisé en ce qu'en plus des deux outils plongeurs (4) est prévu, sur la tête preneuse, un outil de levage et de manutention (5) qui est disposé entre les deux outils plongeurs (4) et peut se déplacer dans le sens axial par rapport à ces outils plongeurs (4).
